# EUROPEAN PATENT APPLICATION

(11) **EP 3 493 549 A1**
(43) Date of publication of application: **05.06.2019**
(21) Application number: 17204506.4
(22) Date of filing: 29.11.2017
(51) Int. Cl.: H04N 21/262, H04N 21/462, H04N 21/482, H04N 21/488

(54) **METHOD, APPARATUS AND COMPUTER PROGRAM FOR IDENTIFYING A SCHEDULING MISMATCH OCCURRING AT A TELEVISION BROADCASTER**

(71) Applicant: Vestel Elektronik Sanayi ve Ticaret A.S., 45030 Manisa (TR)
(72) Inventor: DÖNER,, Çagdas, 45030 Manisa (TR)
(74) Representative: Martinez, Olivier Gildas

(57) **Abstract**

A method of identifying a scheduling mismatch occurring at a television broadcaster comprises receiving (304) subtitles for a television programme at a reception time from a television broadcaster. The method comprises comparing (306) a pair comprising the received subtitles and the reception time with pre-stored pairs in a database, each pre-stored pair comprising expected subtitles and an expected presentation time. The method comprises identifying (312) a scheduling mismatch occurring at the television broadcaster based on the comparing.

## Description

### Technical Field

The present disclosure relates to a method, an apparatus and a computer program for identifying a scheduling issue at a television broadcaster.

### Background

Electronic Program Guides (EPGs) are applications for presenting past, current and/or future television programmes broadcast by television broadcasters. An EPG is typically run on an EPG server. The EPG server is configured to periodically (e.g. weekly) receive EPG data (names of television programmes, presentation times of television programmes, summaries of television programmes, etc.) from the television broadcasters. The EPG server is configured to transmit EPG data to set-top boxes, television sets or other upon request from a user.

A challenge for a television broadcaster is to predict the duration of television programmes. For example, when a television broadcaster broadcasts a live event (e.g. a sport event) the duration may depend on unforeseeable circumstances (e.g. added time in a football game, knock out of a fighter in the first round of a boxing fight, interruption of a tennis game due to poor weather conditions, etc.). In such circumstances, the television broadcaster may have to adjust its schedule and broadcast future television programmes ahead of an original schedule or behind an original schedule. Similar adjustments may also occur when equipment of the television broadcaster is unexpectedly down or in maintenance.

Existing EPG servers have no mechanism to quickly identify scheduling mismatches at a television broadcaster and accordingly no mechanism to quickly correct EPG data. According, a large amount of processing and memory resources are wasted by set top boxes or televisions to receive, process and display erroneous EPG data. The EPG data is also unreliable for the user.

### Summary

According to a first aspect disclosed herein, there is provided a method of identifying a scheduling issue at a television broadcaster, the method comprising:
receiving subtitles for a television programme at a reception time from a television broadcaster;
comparing a pair comprising the received subtitles and the reception time with pre-stored pairs in a database, each pre-stored pair comprising expected subtitles and an expected presentation time; and
identifying a scheduling mismatch occurring at the television broadcaster based on the comparing.

The pair may not match with a pre-stored pair when:
the reception time matches with an expected presentation time but the received subtitles do not match with the corresponding expected subtitles; or
the received subtitles match with expected subtitles but the reception time does not match with the corresponding expected presentation time.

The pair may match with a pre-stored pair when:
the reception time matches with an expected presentation time and the received subtitles match with the corresponding expected subtitles.

The method may comprise:
receiving a name of a television programme and subtitles for the television programme at a reception time from a television broadcaster;
comparing a triplet comprising the received name, the received subtitles and the reception time with pre-stored triplets in a database, each pre-stored triplet comprising an expected name, expected subtitles and an expected presentation time; and
identifying a scheduling mismatch occurring at the television broadcaster based on the comparing.

The triplet may not match with a pre-stored triplet when:
the received name matches with an expected name but the received subtitles do not match with the corresponding expected subtitles and/or the reception time does not match with the corresponding expected presentation time;
the reception time matches with an expected presentation time but the received name does not match with the corresponding expected name and/or the received subtitles do not match with the corresponding expected subtitles; or
the received subtitles match with expected subtitles but the received name does not match with the corresponding expected name and/or the reception time does not match with the corresponding presentation time.

The triplet may match with a pre-stored triplet when:
the received name matches with an expected name, the received subtitles match with the corresponding expected subtitles and the reception time match with the corresponding expected presentation time.

The received name may match with an expected name when the received name is identical to the expected name (e.g. Friends S1 E2/ Friends S1 E2) or at least included in the expected name (e.g. Friends S1/ Friends S1 E2).

The received subtitles may match with expected subtitles when the received subtitles are identical to the expected subtitles (e.g. "Let's go to Central Perk"/ "Let's go to Central Perk") or at least included in the expected subtitles (e.g. "Let's go"/ "Let's go to Central Perk").

The reception time may match with an expected presentation time when the reception time is identical to the expected presentation time (e.g. 22:05:05 (UTC+2) / 22:05:05 (UTC+2)) or separate in time by less than a time threshold (e.g. ± five seconds, 22:05:07 (UTC+2) / 22:05:05 (UTC+2)).

The database may be populated by the television broadcaster before broadcasting the television programme.

The database may be populated by the television broadcaster via a network (e.g. the database and servers of the television broadcaster may form a cloud system). The database may be populated by the television broadcaster using existing protocols (e.g. Digital Video Broadcasting (DVB)).

Identifying a scheduling mismatch occurring at the television broadcaster may comprise identifying that the television broadcaster is behind schedule or ahead of schedule.

The method may comprise displaying a notification indicative of the identified scheduling mismatch.

The method may comprise:
reporting the identified scheduling mismatch to the electronic program guide server so that electronic program guide server remotely generates corrected electronic program guide data based on the identified scheduling mismatch; and
receiving the corrected electronic program guide data.

The method may comprise:
receiving electronic program guide data for display; and
locally generating corrected electronic program guide data based on the identified scheduling mismatch.

The method may comprise generating information bar data for display as information bar based on the corrected electronic program guide data.

The information bar data may be generated locally (e.g. by a television or set top box) or remotely (e.g. by the EPG server).

Generating corrected electronic program guide data based on the identified scheduling mismatch may comprise:
shifting a time window corresponding to a television programme on an electronic program guide user interface to the left by a determined time value when the television broadcaster is ahead of schedule; or
shifting a time window corresponding to a television programme on an electronic program guide to the right by a determined time value when the television broadcaster is behind of schedule.

Generating corrected electronic program guide data based on the identified scheduling mismatch comprises:
reducing a time window corresponding to a television programme on an electronic program guide on the right by a determined time value when the television broadcaster is ahead of schedule; or
extending a time window corresponding to a television programme on an electronic program guide on the right by a determined time value when the television broadcaster is behind of schedule.

The method may be performed entirely or at least in part by a television.

The method may be performed entirely or at least in part by a set top box.

The expected presentation time of the pre-stored pairs or pre-stored triplets in the database are periodical.

For example, the expected presentation times of the pre-stored pairs or pre-stored triplets in the database have a periodicity of five minutes.

The expected presentation time of the pre-stored pairs or pre-stored triplets are non-periodical.

According to a second aspect disclosed herein, there is provided an apparatus comprising:
a processing unit configured to perform the above method.

According to a third aspect disclosed herein, there is provided a computer program for an apparatus, comprising software code portions for performing the above method when said computer program is run on the apparatus.

### Brief Description of the Drawings

To assist understanding of the present disclosure and to show how embodiments may be put into effect, reference is made by way of example to the accompanying drawings in which:
Figure 1 shows schematically an example of a system according to an embodiment disclosed herein;
Figure 2 shows schematically an example of a database according to an embodiment disclosed herein;
Figure 3 shows schematically an example of a flow diagram of a method according to an embodiment disclosed herein;
Figure 4 shows schematically an example of a flow diagram of a method according to an embodiment disclosed herein;
Figure 5 shows schematically an example of a flow diagram of a method according to an embodiment disclosed herein;
Figure 6 is an example of an example of a user interface of an electronic program guide according to an embodiment disclosed herein when a television broadcaster is behind schedule;
Figures 7 and 8 are examples of a user interface of a corrected electronic program guide according to an embodiment disclosed herein;
Figure 9 is an example of an example of a user interface of an electronic program guide according to an embodiment disclosed herein when a television broadcaster is ahead schedule; and
Figures 10 and 11 are examples of a user interface of a corrected electronic program guide according to an embodiment disclosed herein.

### Detailed Description

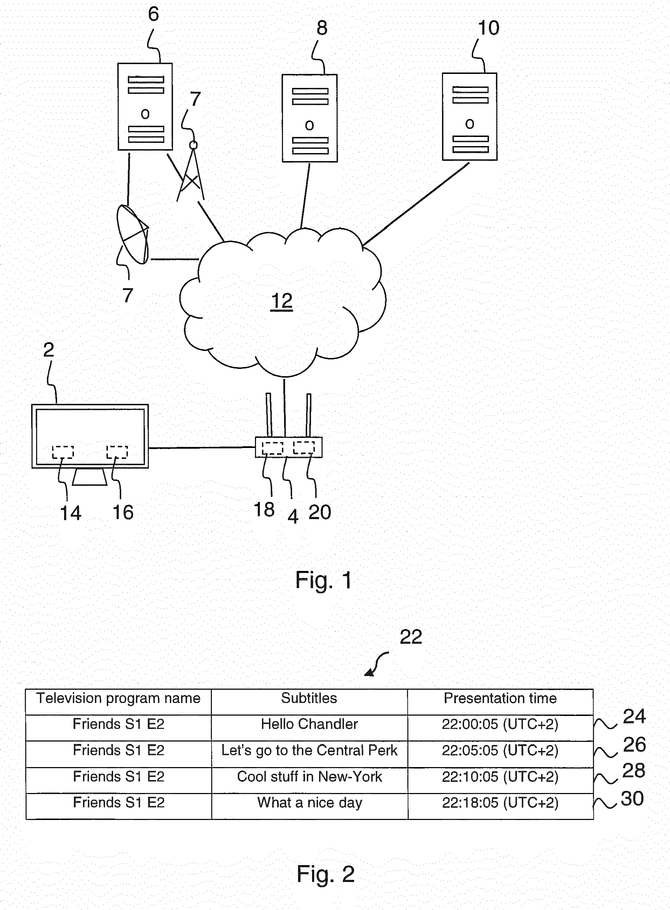

Figure 1 shows schematically an example of a system according to an embodiment. The system comprises a television 2, a set top box 4, a television programme server 6, an electronic program guide server 8 and a database server 10 connected via a network 12.

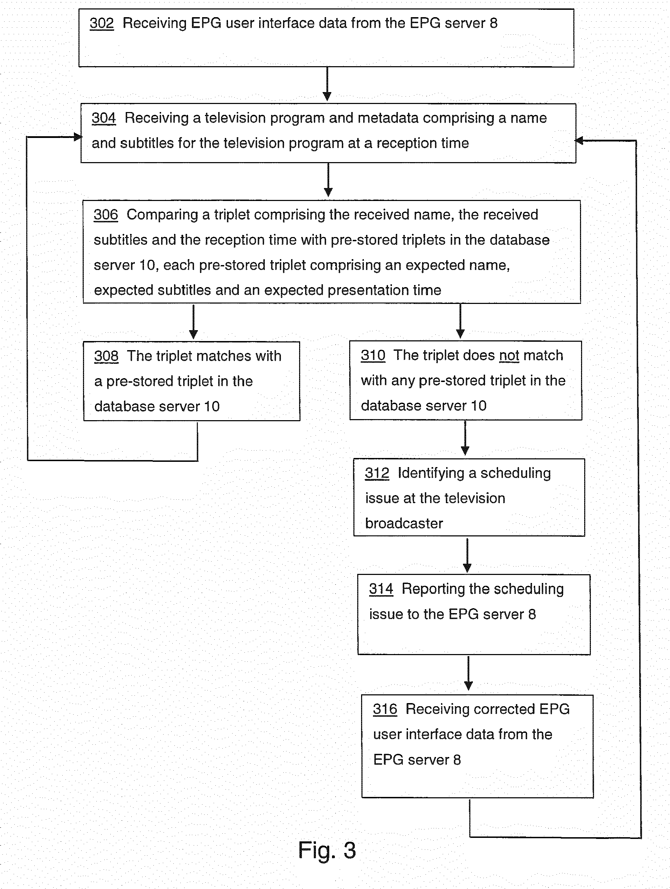

The television 2 comprises a processing unit 14 and a memory unit 16. The memory unit 16 stores instructions which when executed by the processing unit 14 enable the processing unit 14 to perform the methods of Figures 3 to 5 (discussed in further details below).

The set top box 4 comprises a processing unit 18 and a memory unit 20. The memory unit 20 stores instructions which when executed by the processing unit enable the processing unit to perform the methods of Figures 3 to 5 (discussed in further details below).

The television programme server 6 is operated by a television broadcaster (e.g. the British Broadcasting Corporation). The television programme server 6 is configured to store television programmes to be broadcast via a television transmitter 7 (e. g. satellite antenna, terrestrial antenna or other). The television programmes may comprise movies, series, television shows, live events or other. The duration of storage of the television programmes may vary depending on whether the television programmes are intended to be broadcast once or a plurality of times.

The television programme server 6 is also configured to store metadata associated with the television programmes. The metadata may comprise the name of the television programme and subtitles for the television programme.

The electronic program guide (EPG) server 8 may be operated by the television broadcaster or a third party. The EPG server 8 is configured to run an EPG, that is an application to present past, current and/or future television programmes broadcast by the television broadcaster. The EPG server is further configured to periodically (e.g. weekly) receive EPG information (names of television programmes, presentation times of television programmes, summaries of television programmes, etc.) from the television broadcasters. The EPG server 8 is configured to transmit EPG data to the set top box 4 for display on the television 2 upon request by the user.

The database server 10 may be operated by the television broadcaster or a third party. The database server 10 is configured to operate a database 22 (shown schematically in Figure 2) for identifying scheduling mismatches at the television broadcaster (i.e. whether the television broadcaster is ahead of schedule or behind schedule) using a subtitles checking mechanism.

The database 22 is populated by the television broadcaster before broadcasting the television programmes stored on the television programme server 6. The database 22 comprises a plurality of entries or triplets 24, 26, 28 and 30. Each triplet 24, 26, 28 and 30 comprises an expected television programme name, expected subtitles and an expected presentation time. Each triplet 24, 26, 28 and 30 indicates when subtitles are intended to be presented on televisions that are set to watch a television programme broadcast by the television broadcaster.

For example, the triplet 24 indicates that the television broadcaster expects the subtitles "Hello Chandler" to be presented at 22:00:05 (UTC+2) on televisions that are set to watch the television programme Friends S1 E2.

Likewise, the triplet 26 indicates that the television broadcaster expects the subtitles "Let's go to the Central Park" to be presented at 22:05:05 (UTC+2) on televisions that are set to watch the television programme Friends S1 E2.

Here, the triplets 24, 26, 28 and 30 have non-periodical presentation times to account for an advertisement break. For example, the presentation times of the triplets 24 and 26 are separated by five minutes and the presentation times of the triplets 26 and 28 are also separated by five minutes. However, the presentation times of the triplets 28 and 30 are separated by eight minutes. In this way, an advertisement break can be placed between 22:10:05 (UTC+2) and 22:18:05 (UTC+2).

Alternatively, the triplets 24, 26, 28 and 30 could have periodical presentation times. The presentation times of the triplets 28 and 30 would then be separated by five minutes instead of being separated by eight minutes.

It will be understood that although the television programme server 6, the electronic program guide server 8 and the database server 10 are here implemented in separate equipment, they could all be implemented in the same equipment.

Figure 3 shows an example of a flow diagram of a method according to an embodiment.

In step 302, a user instructs the set top box 4 to display an EPG user interface on the television 2. For example, the user presses an EPG button on a remote control of the set top box 4.

The set top box 4 transmits a request for EPG data to the EPG server 8, receives EPG data from the EPG server 8 and forwards the EPG data to the television 2 for display.

In step 304, the user instructs the set top box 4 to display a television programme broadcast by a television broadcaster on the television 2. For example, the user presses a channel number via buttons on the remote control of the set top box 4.

The set top box 4 transmits a request for television programme data to the television programme server 6 and receives television programme data and metadata from the television programme server 6 at a reception time. The metadata comprises the name of the television programme, subtitles of the television programme, expected presentation time of the television programme and expected presentation time of the following television programme. The set top box 4 forwards the television programme data to the television 2 for display.

In step 306, the set top box 4 processes the metadata and forms a triplet comprising the received name, the subtitles and the reception time. The set top box 4 compares the triplet with pre-stored triplets in the database server 10. More specifically, the set top box 4 determines if the triplet matches with a pre-stored triplet.

It will be understood that the triplet does not match with a pre-stored triplet in the database server 10 when:
the received name matches with an expected name but the received subtitles do not match with the corresponding expected subtitles and/or the reception time does not match with the corresponding expected presentation time;
the reception time matches with an expected presentation time but the received name does not match with the corresponding expected name and/or the received subtitles do not match with the corresponding expected subtitles; or
the received subtitles match with expected subtitles but the received name does not match with the corresponding expected name and/or the reception time does not match with the corresponding presentation time.

The triplet matches with a pre-stored triplet when the received name matches with an expected name, the received subtitles match with the corresponding expected subtitles and the reception time match with the corresponding expected presentation time.

The received name matches with an expected name when the received name is identical to the expected name (e.g. Friends S1 E2/ Friends S1 E2) or at least included in the expected name (e.g. Friends S1/ Friends S1 E2).

The received subtitles matches with expected subtitles when the received subtitles are identical to the expected subtitles (e.g. "Let's go to Central Park"/ "Let's go to Central Park") or the received subtitles are at least included in the expected subtitles (e.g. "Let's go"/ "Let's go to Central Park").

The reception time matches with an expected presentation time when the reception time is identical to the expected presentation time (e.g. 22:05:05 (UTC+2) / 22:05:05 (UTC+2)) or separate in time by less than a time threshold (e.g. ± 5 seconds) of the expected presentation time (e.g. 22:05:07 (UTC+2) / 22:05:05 (UTC+2)).

In step 308, the set top box 4 determines that the triplet matches with a pre-stored triplet in the database 10. Accordingly, the set top box 4 determines that the television broadcaster is on schedule and the method loops back to step 304.

In step 310, the set top box 4 determines that the triplet does not match with any pre-stored triplet in the database 10. Accordingly, the set top box 4 determines that there is a scheduling mismatch occurring at the television broadcaster.

In step 312, the set top box 4 identifies the scheduling mismatch occurring at the television broadcaster (i.e. identifies whether the television broadcaster is ahead of schedule or be behind schedule and to which extent).

For example, the set top box 4 identifies a pre-stored triplet in the database 10 with expected name and expected subtitles both matching the received name and the received subtitles but with an expected presentation time not matching the reception time. The set top box 4 compares the expected presentation time with the reception time and determines whether the television broadcaster is ahead of schedule or behind schedule. The set top box 4 further determines a time value representative of the extent of the schedule mismatch (e.g. ahead of schedule by ten minutes, behind schedule by ten minutes).

In step 314, the set top box 4 reports the scheduling mismatch and time value to the EPG server 8 so that the EPG server 8 can remotely generate corrected EPG data based thereon.

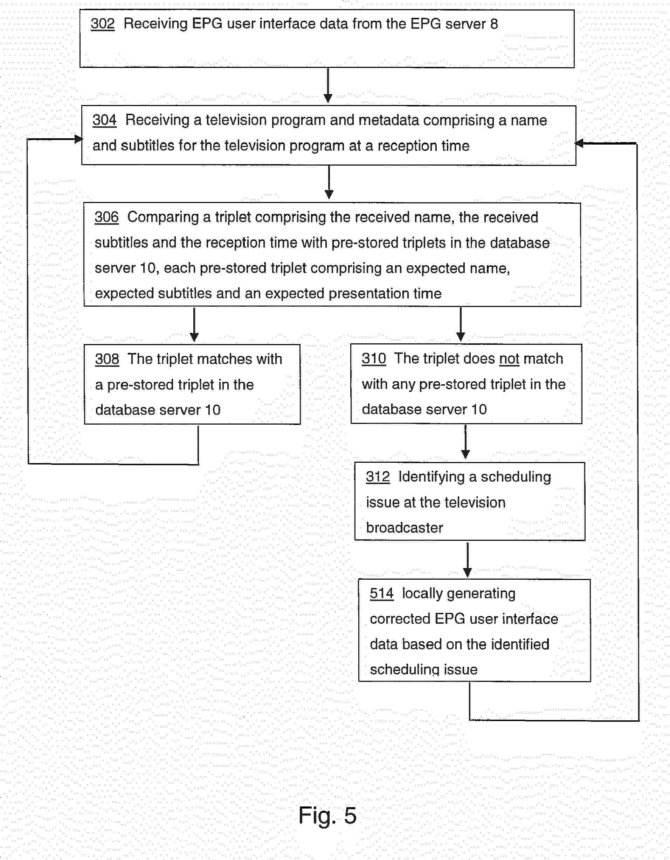

If the television broadcaster is ahead of schedule, generating corrected electronic program guide data may comprise shifting a time window corresponding to the television programme on an EPG user interface to the left by the determined time value. Alternatively, generating corrected electronic program guide data may comprise reducing a time window corresponding to a television programme on an EPG user interface on the right by the determined time value (these concepts will be discussed in further details below in reference to Figures 5 to 7).

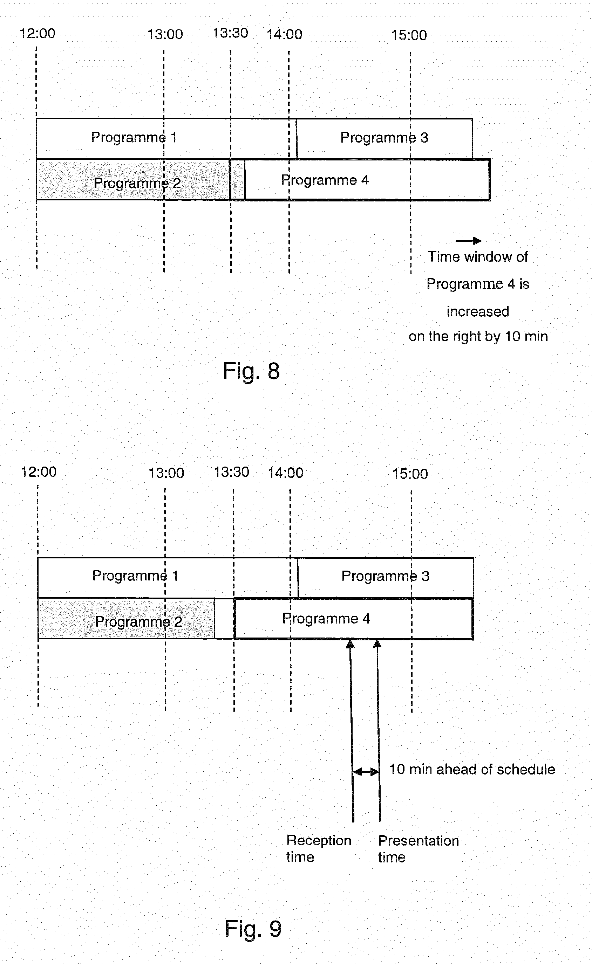

If the television broadcaster is behind schedule, generating corrected electronic program guide data may comprise shifting a time window corresponding to the television programme on an EPG user interface to the right by the determined time value. Alternatively, generating corrected electronic program guide data may comprise extending a time window corresponding to a television programme on an EPG user interface on the right by the determined time value (these concepts will be discussed in further details below in reference to Figures 8 to 11).

In step 316, the user again instructs the set top box 4 to display an EPG user interface on the television 2. For example, the user presses again the EPG button on the remote control of the set top box 4.

The set top box 4 transmits a request for EPG data to the EPG server 8, receives corrected EPG data from the EPG server 8 and forwards the corrected EPG data to the television 2 for display.

The user may subsequently instruct the set top box 4 to display an information bar on the television 2. It will be understood that an information bar typically presents past, current and future television programmes broadcast by a specific television broadcaster (e.g. in banner like user interface) as opposed to an EPG that presents past, current and future television programmes broadcast by a plurality of television broadcasters (e.g. in a grid like user interface). For example, the user presses an information bar button on the remote control of the set top box 4. The set top box 4 then locally generates information bar data for display based on the corrected EPG data received from the EPG server 8.

It will be understood that although the method of Figure 3 is described as being performed by the set top box 4, it could be performed by the television 2. Alternatively, the method of Figure 3 could be performed at least in part by the television 2 and by the set top box 4. Other devices and apparatus for performing the method are possible.

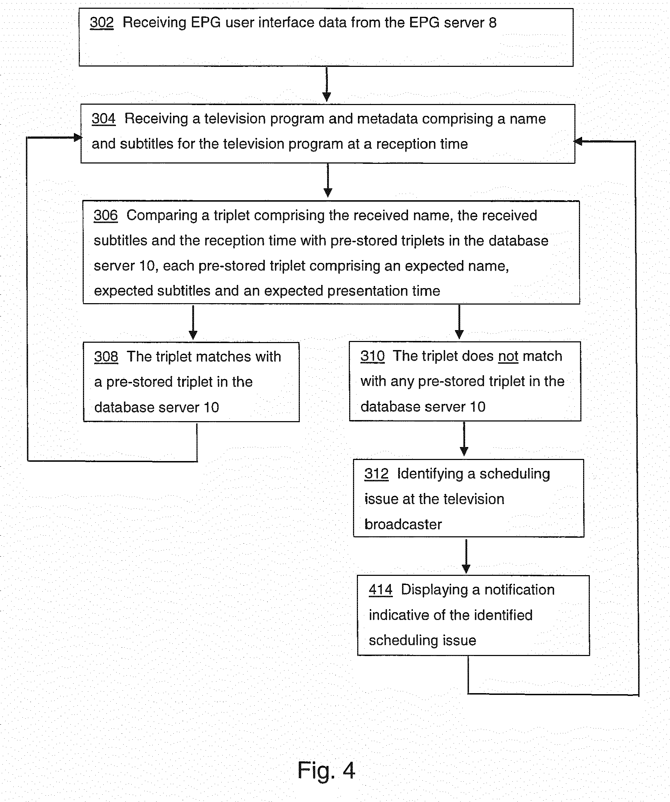

Figure 4 shows a flow diagram of another example of a method according to an embodiment. The method of Figure 4 is identical to the method of Figure 3 except that steps 314 and 316 are replaced by step 414. In the method of Figure 4, the set top box 4 does not report the scheduling mismatch and time value to the EPG server 8 and the EPG server 8 does not remotely generate corrected EPG data. Instead, the EPG data is not corrected but the user is notified of the scheduling mismatch.

In step 414, the user instructs the set top box 4 to display an EPG on the television 2. For example, the user presses the EPG button on the remote control of the set top box 4.

The set top box 4 transmits a request for EPG data to the EPG server 10, receives EPG data from the EPG server 8 and forwards the EPG data to the television 2 for display. Because the EPG data have not been corrected by the EPG server 8, the EPG data are still erroneous. The set top 4 instructs the television 2 to display a notification indicating the identified scheduling mismatch and time value at the television broadcaster. The notification may comprise a text and/or an image.

It will be understood that although the method of Figure 4 is described as being performed by the set top box 4, it could be performed by the television 2. Alternatively, the method of Figure 4 could be performed at least in part by the television 2 and the set top box 4 or by other apparatus.

Figure 5 shows a flow diagram of another example of a method according to an embodiment. The method of Figure 5 is identical to the method of Figure 3 except that steps 314 and 316 are replaced by step 514. In the method of Figure 5, the set top box 4 does not report the scheduling mismatch and time value to the EPG server 8 and the EPG server 8 does not remotely generate corrected EPG data. Instead, the set top box 4 locally generates corrected EPG data based on the scheduling mismatch.

In step 514, the user instructs the set top box 4 to display an EPG on the television 2. For example, the user presses the EPG button on the remote control of the set top box 4. The set top box 4 generates locally corrected EPG data based on the identified scheduling mismatch and time value and forwards the corrected EPG data to the television 2 for display.

The user may subsequently instruct the set top box 4 to display an information bar on the television 2. For example, the user presses an information bar button on the remote control of the set top box 4. The set top box 4 then locally generates information bar data for display based on the corrected EPG data locally generated by the set top box 4.

It will be understood that although the method of Figure 5 is described as being performed by the set top box 4, it could be performed by the television 2. Alternatively, the method of Figure 5 could be performed at least in part by the television 2 and the set top box 4 or by other apparatus.

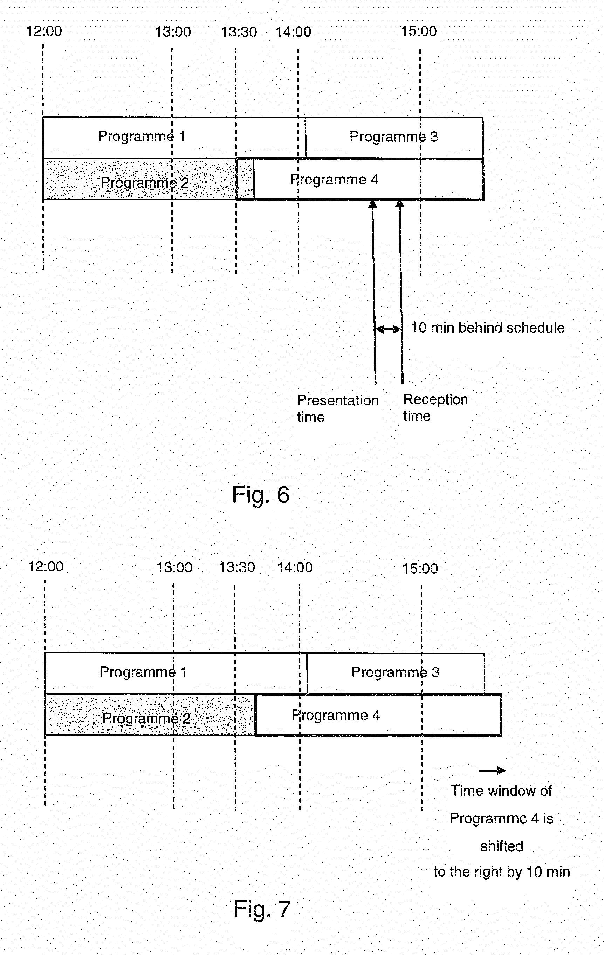

Figure 6 shows an EPG displayed on the television 2 in a scenario where the television broadcaster is behind schedule by ten minutes. For example, Programme 2 has been broadcast ten minutes longer than expected (i.e. Programme 2 has been broadcast until 13:40 instead of 13:30). As a result, Programme 4 is currently broadcast with a ten minutes delay (i.e. Programme 4 has been broadcast from 13:40 instead of 13:30).

Figure 7 shows a corrected EPG where the time window corresponding to Programme 4 has been shifted to the right by ten min.

Figure 8 shows a corrected EPG where the time window corresponding to Programme 4 has been extended on the right by ten min.

Figure 9 shows an EPG displayed on the television 2 in a scenario where the television broadcaster is ahead schedule by ten minutes. For example, Programme 2 has been broadcast ten minutes shorter than expected (i.e. Programme 2 has been broadcast until 13:20 instead of 13:30). As a result, Programme 4 is currently broadcast with a ten minutes advance (i.e. Programme 4 has been broadcast from 13:20 instead of 13:30).

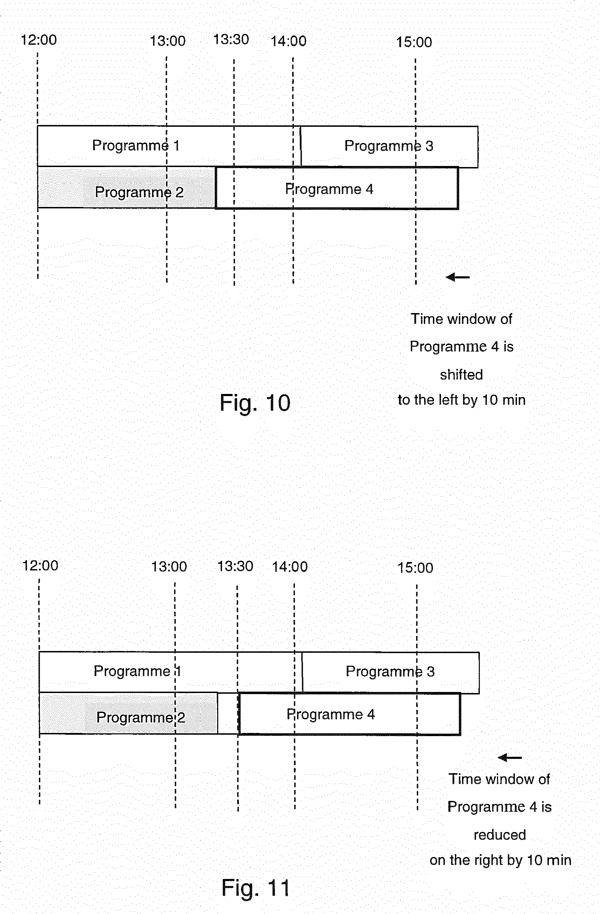

Figure 10 shows a corrected EPG where the time window corresponding to Programme 4 has been shifted to the left by ten min.

Figure 11 shows a corrected EPG where the time window corresponding to Programme 4 has been reduced on the right by ten min.

An advantage of the above embodiment with regard to existing system is that it provides a mechanism to identify scheduling mismatches at a television broadcaster and to correct EPG data provided by an EPG server in a simple manner. As a result, network, processing and memory resources are no longer wasted at any set top box or any television to receive, process and display incorrect EPG data provided by an EPG server.

It will be understood that the processing units referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to memory units. This may be provided by a single device or by plural devices. Suitable devices include for example a hard disk and nonvolatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solidstate drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of identifying a scheduling mismatch occurring at a television broadcaster, the method comprising:
receiving a subtitle for a television programme at a reception time from a television broadcaster;
comparing a pair comprising the received subtitle and the reception time with pre-stored pairs in a database, each pre-stored pair comprising an expected subtitle and an expected presentation time; and
identifying a scheduling mismatch occurring at the television broadcaster based on the comparing.

2. A method according to claim 1, the method comprising:
receiving a name of a television programme and subtitles for the television programme at a reception time from a television broadcaster;
comparing a triplet comprising the received name, the received subtitles and the reception time with pre-stored triplets in a database, each pre-stored triplet comprising an expected name, expected subtitles and an expected presentation time; and
identifying a scheduling mismatch occurring at the television broadcaster based on the comparing.

3. A method according to claim 1 or claim 2, wherein the database is populated by the television broadcaster before broadcasting the television program.

4. A method according to any of claims 1 to 3, wherein identifying a scheduling mismatch occurring at the television broadcaster comprises identifying that the television broadcaster is behind schedule or ahead of schedule.

5. A method according to any of claims 1 to 4 comprising displaying a notification indicative of the identified scheduling mismatch.

6. A method according to any of claims 1 to 5, comprising:
reporting the identified scheduling mismatch to an electronic program guide server so that electronic program guide server remotely generates corrected electronic program guide data based on the identified scheduling mismatch; and
receiving the corrected electronic program guide data.

7. A method according to any of claims 1 to 6, comprising:
receiving electronic program guide data; and
locally generating corrected electronic program guide data based on the identified scheduling mismatch.

8. A method according to claim 6 or claim 7, comprising:
generating information bar data for display as information bar based on the corrected electronic program guide data.

9. A method according to claim 6 or claim 7, wherein generating corrected electronic program guide data based on the identified scheduling mismatch comprises:
shifting a time window corresponding to a television programme on an electronic program guide to the left by a determined time value when the television broadcaster is ahead of schedule; or
shifting a time window corresponding to a television programme on an electronic program guide to the right by a determined time value when the television broadcaster is behind of schedule.

10. A method according to claim 6 or claim 7, wherein generating corrected electronic program guide data based on the identified scheduling mismatch comprises:
reducing a time window corresponding to a television programme on an electronic program guide on the right by a determined time value when the television broadcaster is ahead of schedule; or
extending a time window corresponding to a television programme on an electronic program guide on the right by a determined time value when the television broadcaster is behind of schedule.

11. A method according to any of claims 1 to 10, wherein the method is performed entirely or at least in part by a television or a set top box.

12. A method according to any of claims 1 to 11, wherein the expected presentation times of the pre-stored pairs or pre-stored triplets in the database are periodical.

13. A method according to any of claims 1 to 11, wherein the expected presentation times of the pre-stored pairs or pre-stored triplets in the database are non-periodical.

14. An apparatus comprising:
a processing unit configured to:
receive subtitles for a television programme at a reception time from a television broadcaster;
compare a pair comprising the received subtitles and the reception time with pre-stored pairs in a database, each pre-stored pair comprising expected subtitles and an expected presentation time; and
identify a scheduling mismatch occurring at the television broadcaster based on the comparing.

15. A computer program for an apparatus, comprising software code portions for performing the method of any of claims 1 to 13 when said computer program is run on the apparatus.
